# EUROPEAN PATENT APPLICATION

(11) **EP 4 455 883 A1**
(43) Date of publication of application: **30.10.2024**
(21) Application number: 24172459.0
(22) Date of filing: 25.04.2024
(51) Int. Cl.: G06F 9/54, H04L 67/06, H04L 67/1097, G06F 3/06, H04L 67/55, H04L 67/568

(54) **ACCELERATION OF DATA TRANSMISSION BETWEEN PRODUCERS AND CONSUMERS OF A DISTRIBUTED-CLUSTERED APPLICATION**

(30) Priority: 28.04.2023 US 202318308876
(71) Applicant: NetApp, Inc., San Jose, CA 95128 (US)
(72) Inventor: Srinivasan, Kiran, San Jose, CA 95128 (US); Vivekanandan, Senthil Murugan, San Jose, CA 95128 (US); Pailet, Gregory, San Jose, CA 95128 (US)
(74) Representative: Grünecker Patent- und Rechtsanwälte PartG mbB

(57) **Abstract**

The technology disclosed herein enables accelerated data transmission between producers and consumers. In a particular example, a method includes receiving a first request from a producer-connector component of a producer component to store a payload to a storage repository. In response to the first request, the method includes providing a unique identifier to the connector component. The connector component provides the unique identifier to the distributed-clustered application. The method further includes storing the payload in association with the unique identifier to the storage repository. The method also includes retrieving the payload from the storage repository using the unique identifier to identify the payload in the storage repository. The method includes receiving a second request from a consumer-connector component of the consumer component to retrieve the payload. In response to the second request, the method includes supplying the payload to the consumer component.

## Description

### TECHNICAL FIELD

Transmission of data from producers to consumers through distributed-clustered applications.

### BACKGROUND

Distributed-clustered applications, such as Kafka^{®}, Cassandra^{®}, and the like, store and organize data from application processes referred to as producers. Application processes referred to as consumers retrieve the data from the distributed-clustered applications. A distributed-clustered application is hosted by a set of distributed servers in a cluster that can scale (e.g., add more servers) depending on requirements of the producers and consumers for the distributed-clustered application. The servers typically use direct-attached storage systems (DAS) for storing data before distributing the data. To help with fault-tolerance, multiple replicas of the data are created among the servers on the DAS.

By using DAS, it may be difficult to implement consistent and uniform storage policies for data retention, protection, and governance for all the individual DAS servers. Also, using DAS may cause inefficiency in terms of storage space consumed by the stored data since protection against failures requires costly replication of data. Data replication may further lead to additional consumption of network bandwidth or other system resources. These inefficiencies affect the latency time between a producer storing data in the distributed-clustered application and a consumer accessing that data.

### SUMMARY

The technology disclosed herein enables accelerated data transmission between producers and consumers. In a particular example, a method includes receiving a first request from a producer-connector component of a producer component to store a payload to a storage repository. In response to the first request, the method includes providing a unique identifier to the connector component. The connector component provides the unique identifier to the distributed-clustered application. The method further includes storing the payload in association with the unique identifier to the storage repository. The method also includes retrieving the payload from the storage repository using the unique identifier to identify the payload in the storage repository. The method includes receiving a second request from a consumer-connector component of the consumer component to retrieve the payload. In response to the second request, the method includes supplying the payload to the consumer component.

In other examples, an apparatus performs the above-recited methods and computer readable storage media directs a processing system to perform the above-recited methods.

### BRIEF DESCRIPTION OF THE DRAWINGS

Figure 1 illustrates an implementation for accelerated data transmission from a producer to a consumer using a distributed cluster application.
Figure 2 illustrates an operational scenario for accelerating data transmission from a producer to a consumer using a distributed cluster application.
Figure 3 illustrates an implementation for accelerating data transmission from a producer to a consumer using a distributed cluster application.
Figure 4 illustrates an operational scenario for accelerating data transmission from a producer to a consumer using a distributed cluster application.
Figure 5 illustrates an operational scenario for accelerating data transmission from a producer to a consumer using a distributed cluster application.
Figure 6 illustrates an operation to accelerate data transmission from a producer to a consumer using a distributed cluster application.
Figure 7 illustrates a computing system for initializing a new master node using node states determined prior to being designated the new master node.

### DETAILED DESCRIPTION

As new uses for distributed-clustered applications arise, at least some of the new uses may transmit a lot more data to the distributed-clustered applications than legacy uses. Messages to a distributed-clustered application that used to be measured in kilobytes at the largest may now include data measured in the megabytes or greater. These larger amounts of data use more resources in the distributed-clustered application and lead to increased latency between producers and consumers through the distributed-clustered application. For example, a message may be transmitted by a producer to one server hosting the distributed-clustered application while a consumer of that data uses a different server to interface with the distributed-clustered application. The larger the amount of data in the message, the longer it may take to reach the server used by the consumer. The consumer may, therefore, be unaware that the data was even transmitted by the producer until it arrives at the distributed-clustered application server used by the consumer. Additionally, the other servers storing the data may use more storage space to store the data for the sake of redundancy and data protection.

The acceleration layer and connectors thereto described below reduce the latency of data transmitted between producers and consumers of a distributed-clustered application. As noted above, larger amounts of data take longer to propagate through servers of a distributed-clustered application to a consumer and use more resources of the servers when doing so. The acceleration layer enables transmission of smaller amounts of data in messages through the distributed-clustered application in place of the actual data intended to be transmitted. The actual data is stored in a storage repository separate from the distributed-clustered application and accessible by both a producer and a consumer via the acceleration layer. The small amount of data acts as a key for identifying the data stored in the storage repository and should propagate faster through the servers of the distributed-clustered application than the actual data would have. The consumer retrieves the key data from the distributed-clustered application and the key is used to retrieve the data from the data repository. The data from the producer, therefore, arrives at the consumer faster than had the data been propagated through the distributed-clustered application.

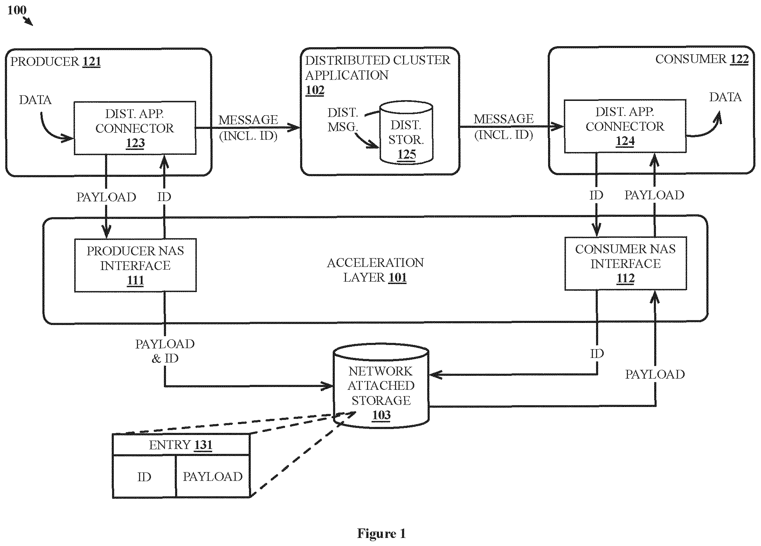

Figure 1 illustrates implementation 100 for accelerated data transmission from a producer to a consumer using a distributed cluster application. Implementation 100 includes acceleration layer 101, distributed-cluster application 102, Network Attached Storage (NAS) 103, producer 121, and consumer 122. Producer 121 includes distributed application connector for interfacing with acceleration layer 101 and consumer 122 includes distributed application connector 124 for interfacing with acceleration layer 101. Acceleration layer 101 includes producer NAS interface 111, which interfaces between distributed application connector and NAS 103, and consumer NAS interface 112, which interfaces between distributed application connector 124 and NAS 103.

Producer 121 is an application that provides data to distributed-cluster application 102 for access therefrom by applications known as consumers, such as consumer 122. Distributed-cluster application 102 is an application, such as Kafka or Cassandra, that executes on a cluster of servers, which enables scalability for the application. Distributed-cluster application 102 provides the mechanism by which data can be passed in an organized manner between producer 121 and consumer 122, which is why distributed-cluster application 102 is included in the data path between producer 121 and consumer 122. Data passed to distributed-cluster application 102 is distributed among distributed storage 125, which is storage of the servers in the cluster hosting distributed-cluster application 102. Distributed storage 125 may include DAS servers or may use some other type of distributed storage.

Producer 121 includes distributed application connector 123, although, in other examples, distributed application connector 123 may be a separate process than producer 121. As such, distributed application connector 123 may simply be program instructions included within producer 121 or may be a distinct set of program instructions. Similarly, the functionality of distributed application connector 123 may be distributed between program instructions of producer 121 and the distinct set of program instructions while still being referred to herein as distributed application connector 123. Distributed application connector 123 may use an Application Programming Interface (API) of distributed-cluster application 102 to transmit messages with data to distributed-cluster application 102. In addition to being configured to access distributed-cluster application 102, distributed application connector 123 is configured to interface with acceleration layer 101 to transmit data via acceleration layer 101. For example, distributed application connector 123 may include a daemon that executes with instructions to use acceleration layer 101 as described herein. Consumer 122 similarly includes distributed application connector 124, which, like distributed application connector 123, may be some combination of program instruction within consumer 122 or a distinct set of program instructions. Like distributed application connector 123, distributed application connector 124 may use an API of distributed-cluster application 102 and is configured (e.g., with a daemon) to interface with acceleration layer 101 as described herein.

Acceleration layer 101 includes two processes, producer NAS interface 111 and consumer NAS interface 112. Producer NAS interface 111 interfaces with distributed application connector 123 and NAS 103. Consumer NAS interface 112 interfaces with distributed application connector 124 and NAS 103. Both producer NAS interface 111 and consumer NAS interface 112 are preferably located close (e.g., on the same host system) to their respective distributed application connectors 123 and 124 to improve performance and reduce latency when transmitting data through distributed-cluster application 102. This example uses NAS 103 as the storage repository to which data from producer 121 is stored but, in other examples, a different type of storage repository may be used that is accessible by producer and consumer interfaces in acceleration layer 101.

In operation, producer 121 passes data distributed application connector 123 for transmittal to distributed-cluster application 102. The data may represent any type of information that would be relevant to consumer 122 in this example. As explained in more detail in operational scenario 200 below, rather than sending a message with the data in its payload to distributed-cluster application 102, the payload is passed to acceleration layer 101. A unique identifier corresponding to the payload is received from acceleration layer 101 and is included in the payload of the message instead of the data. The unique identifier is likely smaller (in some cases much smaller) than the data (e.g., the unique identifier may only be a few bytes long while the data may be many megabytes or more). Therefore, the message containing a smaller unique identifier than the data will use less storage resources as the message is distributed across distributed storage 125 and will propagate more quickly across distributed storage 125 for retrieval by consumer 122.

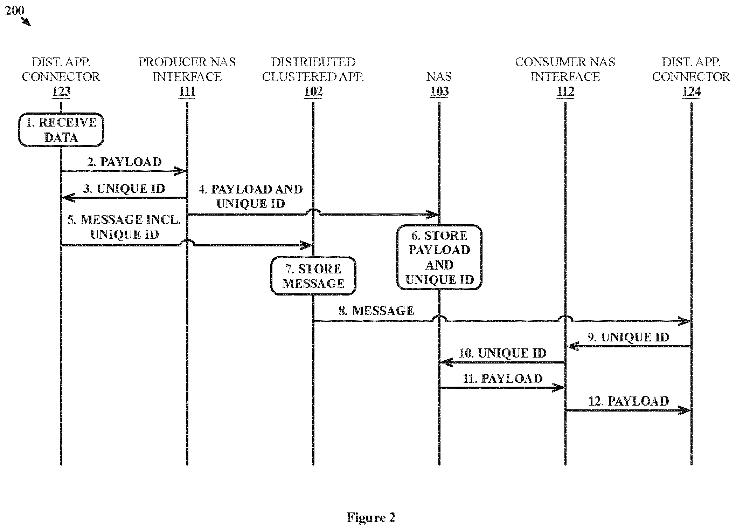

Figure 2 illustrates operational scenario 200 for accelerating data transmission from a producer to a consumer using a distributed cluster application. In operational scenario 200, distributed application connector 123 receives a request from producer 121 at step 1 to provide data to distributed-cluster application 102 in a message payload. The request may be explicit or may be implicit. For instance, when producer 121 is ready with the data, producer 121 may simply pass the data to distributed application connector 123, or otherwise invoke the functionality of distributed application connector 123 on the data, and distributed application connector 123 may automatically recognize that the data should be sent to distributed-cluster application 102. Traditionally, distributed application connector 123 may simply include the data in the payload of a message formatted as required by distributed-cluster application 102. However, distributed application connector 123 is configured to use acceleration layer 101 to accelerate the transmittal of the data while still leveraging the benefits of distributed-cluster application 102.

Specifically, distributed application connector 123 passes what would be the payload of the message at step 2 to producer NAS interface 111 instead of sending the payload to distributed-cluster application 102. The payload at least includes the data provided by producer 121 but may also include additional information or formatting that distributed application connector 123 would include in the payload of a message to distributed-cluster application 102. In some examples, a portion of the memory of a host system executing distributed application connector 123 and producer NAS interface 111 may be shared between distributed application connector 123 and producer NAS interface 111. In such examples, the payload may be placed into a location of the shared memory and distributed application connector 123 may notify producer NAS interface 111 that the payload is in the location or producer NAS interface 111 may monitor the shared memory for payloads. Using shared memory further reduces latency that would be caused by the payload having to be copied to different memory locations.

In response to being passed the payload, producer NAS interface 111 generates a unique identifier corresponding to the payload and provides the unique identifier at step 3 to distributed application connector 123. The unique identifier may be any data that uniquely identifies the payload with respect to other payloads that may be handled by acceleration layer 101. Preferably, the unique identifier is on the order of a few bytes (e.g., 8 bytes) in length to ensure it remains small compared to the data received from producer 121. The unique identifier may be output generated by feeding the payload into a hash function, may be a sequential number assigned to payloads in the order in which they are received, may be random with checks to ensure uniqueness, or may be data generated in some other manner. Producer NAS interface 111 may provide the unique identifier via shared memory with distributed application connector 123 or, since the unique identifier is relatively small, may provide the unique identifier using some other mechanism for passing data between processes. In other examples, distributed application connector 123 may generate the unique identifier itself and pass the unique identifier along with the payload to producer NAS interface 111.

Producer NAS interface 111 stores the payload in association with the unique identifier in NAS 103 at step 4. NAS 103 may include a key-value store where the payload and unique identifier are stored as entry 131 therein with the unique identifier being the key and the payload being the value. In other examples, NAS 103 may be a file-based storage system and the payload may be stored in one file while the unique identifier is stored in another file with an indication of where the payload is located (e.g., an identifier for the other file with the payload and/or a location of the payload within the other file). NAS 103 may be accessed using the Network File System, Common Internet File System (CIFS), Internet Small Computer Systems Interface (iSCSI), or some other mechanism for accessing a file system over a network. Other manners of storing the payload in NAS 103 may also be used as long as the payload can be identified within NAS 103 based on the unique identifier associated therewith.

In some examples, producer NAS interface 111 may include user-space libraries and a networking stack to accelerate communication with NAS 103 (e.g., without having to rely on an underlying kernel, which would add latency). For example, producer NAS interface 111 may include LibNFS for accessing the Network File System (NFS) if NAS 103 uses NFS, may include F-Stack for exchanging network communications with NAS 103, and the Data Plane Development Kit (DPDK) to offload network packet processing from the kernel to F-stack. Consumer NAS interface 112 may also use similar components to interact with NAS 103 to operate as described below.

In response to receiving the unique identifier from producer NAS interface 111, distributed application connector 123 generates a message for distributed-cluster application 102 including the unique identifier in the payload rather than the data received from producer 121. The message is transmitted to distributed-cluster application 102 at step 5. Upon receiving the message, distributed-cluster application 102 treats the message as it would any other message received from a producer. That is, distributed-cluster application 102 stores the message at step 7 and distributes it across distributed storage 125. Since the payload having the unique identifier is likely smaller than the payload would have been had the data from producer 121 been included, the message should use less resources when distributed across distributed-cluster application 102.

After the message has propagated through distributed-cluster application 102 to the point where distributed application connector 124 can access the message (e.g., has reached a node of distributed-cluster application 102 that is accessible by distributed application connector 124), distributed application connector 124 retrieves the message from distributed-cluster application 102 at step 8. Distributed application connector 124 may be preconfigured (or have standing instructions) to automatically retrieve any new message that arises in distributed-cluster application 102 or within a specific channel of distributed-cluster application 102 (e.g., within a specific topic of Kafka) or distributed application connector 124 may receive an explicit request from consumer 122 to retrieve the message.

Distributed application connector 124 obtains the unique identifier from the payload of the message. Instead of providing the unique identifier from the payload, as distributed application connector 124 would typically have done had the data from producer 121 been in the payload, distributed application connector 124 passes the unique identifier to consumer NAS interface 112. Distributed application connector 124 may share host memory with consumer NAS interface 112 like described above between distributed application connector 123 and producer NAS interface 111. In that case, the unique identifier may be added to a location of the shared memory and consumer NAS interface 112 may automatically recognize its presence or distributed application connector 124 may notify consumer NAS interface 112 that the unique identifier is in the shared memory. In other examples, different mechanisms for passing data between processes may be used.

Consumer NAS interface 112 uses the unique identifier at step 10 to locate the payload in NAS 103. For example, if NAS 103 includes a key-value store, then consumer NAS interface 112 uses the unique identifier as a key to find the payload as the value (e.g., finds entry 131). Alternatively, if the unique identifier and the payload are stored in different files, consumer NAS interface 112 may the unique identifier in one file and find the payload in another file based on information associated with the unique identifier. Other mechanisms for associating the unique identifier with the payload in NAS 103 may also be used and consumer NAS interface 112 will be configured to find the payload using the unique identifier in accordance with whatever mechanism producer NAS interface 111 used when storing the payload in association with the unique identifier. After finding the payload, consumer NAS interface 112 retrieves the payload from NAS 103 at step 11. The payload is then passed to distributed application connector 124 at step 12. If distributed application connector 124 shares host memory with consumer NAS interface 112, then consumer NAS interface 112 may place the payload in a location of the shared memory for retrieval by distributed application connector 124. While shared memory is preferable to reduce latency, other mechanisms for passing data between processes may be used. Upon receiving the payload, distributed application connector 124 can supply the data from the payload to consumer 122. Consumer 122 is, therefore, able to operate on the data from producer 121 just as though the data passed through distributed-cluster application 102. By passing the data through NAS 103 via acceleration layer 101 instead, the data should be available to consumer 122 quicker than had the data passed through NAS 103. Moreover, storing the data in NAS 103 allows policies for data protection, retention, and governance to be implemented on one storage system (i.e., NAS 103) rather than implementing the policies across distributed storage 125, which may be difficult.

It should be understood that the order of steps in operational scenario 200 is merely exemplary. Some steps may occur out of the order shown. For instance, steps 4 and 5 may occur in a different order or at substantially the same time. Only steps that require performance of previous steps need occur after those previous steps. For example, distributed application connector 123 must first receive the unique identifier in order to send the unique identifier in the message to distributed-cluster application 102.

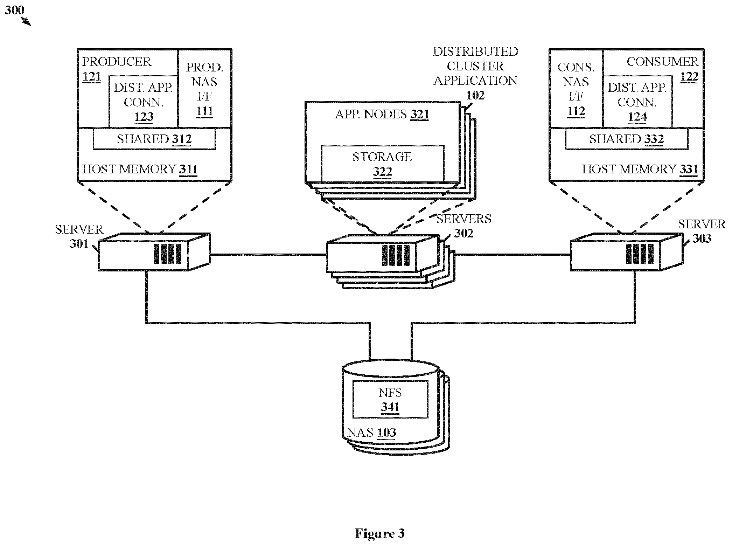

Figure 3 illustrates implementation 300 for accelerating data transmission from a producer to a consumer using a distributed cluster application. Implementation 300 includes servers 301-303 and NAS 103. Producer 121 with distributed application connector 123 and producer NAS interface 111 execute on server 301. Consumer 122 with distributed application connector 124 and consumer NAS interface 112 execute on server 303. Server 303 host application nodes 321 of distributed-cluster application 102. Each of servers 302 includes a storage 322 upon which messages are stored when distributed across application nodes 321. Storage 322 on each of servers 302 are examples of distributed storage 125. In some examples, a node of application nodes 321 may be executing on server 301 and/or server 303. Having a node executing on the same server as a producer or consumer may enable quicker access to distributed-cluster application 102. Server 301 includes host memory 311 with a portion of host memory 311 being shared memory 312, which is shared between producer 121, distributed application connector 123, and producer NAS interface 111. Likewise, server 303 includes host memory 331 with a portion of host memory 331 being shared memory 332, which is shared between consumer 122, distributed application connector 124, and consumer NAS interface 112. Host memory 311 and host memory 331 are preferably a type of Random Access Memory (RAM) for quicker access but may be other types of memory as well, such as hard disk drives, solid state drives, etc. - including combinations thereof. In operation, shared memory 312 and shared memory 332 enables data to be more quickly passed between processes sharing shared memory 312 and shared memory 332, as described below. NAS 103 also uses NFS 341 to store files and producer NAS interface 111 and consumer NAS interface 112 access host memory 311 in the examples below.

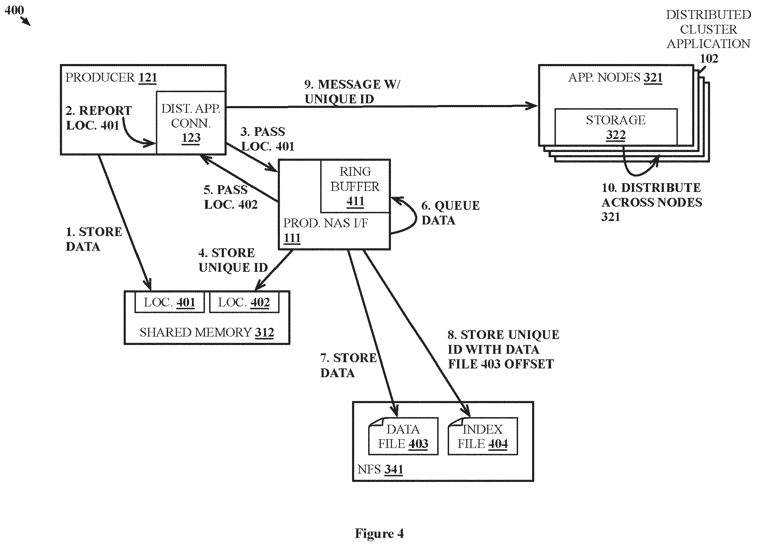

Figure 4 illustrates operational scenario 400 for accelerating data transmission from a producer to a consumer using a distributed cluster application. Operational scenario 400 is an example for how data from producer 121 may be transmitted from distributed application connector 123 using acceleration layer 101. In operational scenario 400, producer 121 stores data at step 1 to location 401 in shared memory 312. The data stored to location 401 is data that producer 121 intends to be sent to distributed-cluster application 102 for distribution to consumers, such as consumer 122. Producer 121 reports location 401 to distributed application connector 123 at step 2. The report in this example includes a pointer to location 401, although, location 401 may be identified differently in other examples. Distributed application connector 123 then passes the pointer to location 401 to producer NAS interface 111 at step 3.

Producer NAS interface 111 generates a unique identifier and stores the unique identifier at step 4 to location 402 of shared memory 312. Producer NAS interface 111 passes a pointer to location 402 back to distributed application connector 123 at step 5. Producer NAS interface 111 also queues the data for transmittal to NAS 103 in ring buffer 411. Ring buffer 411 ensures data received from producer 121 is transmitted to NAS 103 in the order in which it was received. As such, producer 121 may have stored data to other locations in shared memory 312 for transmittal prior to storing the data of the present example. Ring buffer 411 ensures the data of the present example will not be transmitted until the data before it in ring buffer 411 is transmitted. When the data is next up in ring buffer 411, producer NAS interface 111 stores the data to data file 403 in NFS 341 at step 7. In this example, data file 403 includes more than just the data of the present example. As such, when consumer NAS interface 112 goes to retrieve the data, consumer NAS interface 112 will require more than just the identity of data file 403 to find the data associated with the unique identifier. To that end, producer NAS interface 111 stores the unique identifier to index file 404 at step 8 in association with an offset to a location in data file 403 where the data is located. Index file 404 may include other unique identifiers stored in association with offsets to the data corresponding to those unique identifiers (e.g., data stored previously from ring buffer 411).

While producer NAS interface 111 is handling the storage of the data and unique identifier in NFS 341, distributed application connector 123 retrieves the unique identifier from location 402 and packages the unique identifier in a payload of a message formatted for distributed-cluster application 102. Distributed application connector 123 transmits the message at step 9 to a node of application nodes 321 with which distributed application connector 123 is presently configured to communicate. The node stores the message in storage 322 and distributes the message across other nodes of application nodes 321 at step 10. Upon reaching a node accessible by a consumer, the message will be available for retrieval. Thus, it is beneficial to accelerate the process for distributing the message across the nodes by reducing the amount of data that needs to be distributed, as operational scenario 400 sends the unique identifier rather than the data produced by producer 121.

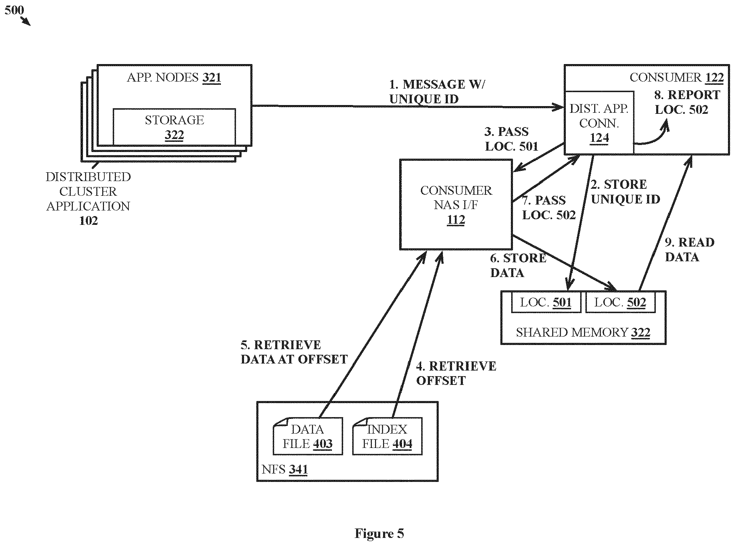

Figure 5 illustrates operational scenario 500 for accelerating data transmission from a producer to a consumer using a distributed cluster application. Operational scenario 500 is an example of how the data from producer 121 in operational scenario 400 may be retrieved by consumer 122. In operational scenario 500, distributed application connector 124 retrieves the message stored by distributed application connector 123 at step 1 from a node of application nodes 321 with which distributed application connector 124 is presently configured to communicate. Distributed application connector 124 may retrieve the message automatically upon determining that the message has reached the node from which the message is retrieved or distributed application connector 124 may retrieve the message in response to a request from consumer 122 to retrieve the message. Distributed application connector 124 extracts the unique identifier from the message and stores the unique identifier at step 2 to location 501 in shared memory 332. Distributed application connector 124 passes a pointer to location 501 at step 3 to consumer NAS interface 112.

Upon receiving the pointer, consumer NAS interface 112 reads the unique identifier from location 501 and uses the unique identifier at step 4 to retrieve the offset to the corresponding data. Specifically, consumer NAS interface 112 finds the unique identifier in index file 404 and retrieves the offset associated with the unique identifier in index file 404. After retrieving the offset, consumer NAS interface 112 retrieves the data at the offset in data file 403 at step 5. Consumer NAS interface 112 stores the data at step 6 to location 502 in shared memory 332. Consumer NAS interface 112 passes a pointer to location 502 to distributed application connector 124 at step 7. Distributed application connector 124 in turn reports at step 8 the pointer to location 502 to consumer 122. Consumer 122 then reads the data from location 502 at step 9. After reading the data, consumer 122 operates on the data. Consumer 122 need not be aware that the data was not actually received in a message from distributed-cluster application 102 but, rather, retrieved from NAS 103 using a unique identifier received from distributed-cluster application 102.

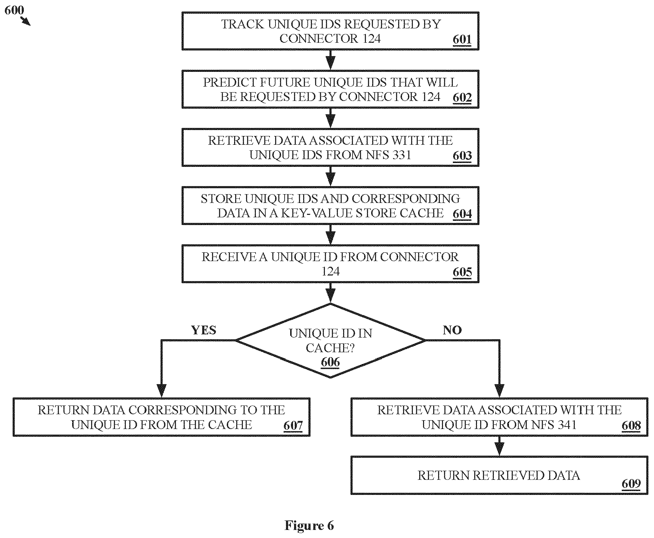

Figure 6 illustrates operation 600 to accelerate data transmission from a producer to a consumer using a distributed cluster application. The examples above imply that consumer NAS interface 112 must first receive the unique identifier from distributed application connector 124 before retrieving the data associated therewith from NAS 103. Performing operations in that order may lead to unwanted latency as distributed application connector 124 needs to wait while consumer NAS interface 112 retrieves the data from NAS 103. Operation 600 is an example where latency is reduced by caching data associated with a unique identifier prior to receiving a request from distributed application connector 124 with the unique identifier.

In operation 600, consumer NAS interface 112 tracks unique identifiers requested by distributed application connector 124 (601). Tracking the unique identifiers enables distributed application connector 124 to recognize a pattern for unique identifiers being requested. The pattern may not be a pattern recognized in the information of the unique identifier since that would likely require the provision of unique identifiers by producer NAS interface 111 to follow a defined progression (e.g., increasing a numeric unique identifier by one for each new unique identifier being created). Instead, consumer NAS interface 112 may track the data being fetched in correspondence to each unique identifier to recognize a pattern in the data fetching. For instance, consumer NAS interface 112 may recognize that data is being fetched from offsets at every 8 megabytes. Similarly, consumer NAS interface 112 may recognize where in index file 404 the unique identifiers are located to identify a pattern therein.

Based on the pattern determined by consumer NAS interface 112, consumer NAS interface 112 predicts one or more unique identifiers that will be requested by distributed application connector 124 in the future (602). Consumer NAS interface 112 retrieves the data associated with the predicted unique identifiers from NAS 103 prior to distributed application connector 124 actually requesting the data for the predicted unique identifiers (603). The retrieved data is stored in a cache of shared memory 332 formatted as a key-value store (604). The unique identifiers are the keys stored in the key-value store with data corresponding to the respective unique identifiers being the values stored in the key-value store.

When consumer NAS interface 112 receives a unique identifier from distributed application connector 124 (605), consumer NAS interface 112 first determines whether the received unique identifier is a key within the key-value store (606). If the unique identifier is present in the key-value store, consumer NAS interface 112 returns the data as the corresponding value from the key-value store (607). Since the key-value store is located in shared memory 332, consumer NAS interface 112 may pass a pointer to the location in shared memory 332 the data occupies such that distributed application connector 124 or consumer 122 can read the data from the location directly. If, however, the unique identifier is not present in the key-value store, then consumer NAS interface 112 retrieves the data associated with the unique identifier from NFS 341 in a manner similar to that described in operational scenario 500 (608). The retrieved data may be stored in the key-value store or may be stored elsewhere in shared memory 332. Regardless, consumer NAS interface 112 returns a pointer to the retrieved data to distributed application connector 124 or consumer 122 can read the data from the location in shared memory 332 (609). As long as consumer NAS interface 112 is good enough at predicting which data should be added to the cache, the latency caused by an occasional cache miss requiring data retrieval from NFS 341 would be outweighed by improved latency of data that is included in the cache.

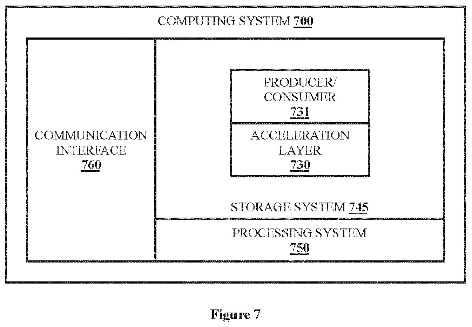

Figure 7 illustrates computing system 700 for initializing a new master node using node states determined prior to being designated the new master node. Computing system 700 is representative of any computing system or systems with which the various operational architectures, processes, scenarios, and sequences disclosed herein can be implemented. Computing system 700 is an example architecture for servers 301-303, although other examples may exist. Computing system 700 includes storage system 745, processing system 750, and communication interface 760. Processing system 750 is operatively linked to communication interface 760 and storage system 745. Communication interface 760 may be communicatively linked to storage system 745 in some implementations. Computing system 700 may further include other components such as a battery and enclosure that are not shown for clarity.

Communication interface 760 comprises components that communicate over communication links, such as network cards, ports, radio frequency (RF), processing circuitry and software, or some other communication devices. Communication interface 760 may be configured to communicate over metallic, wireless, or optical links. Communication interface 760 may be configured to use Time Division Multiplex (TDM), Internet Protocol (IP), Ethernet, optical networking, wireless protocols, communication signaling, or some other communication format - including combinations thereof. Communication interface 760 may be configured to communicate with other servers of servers 301-303, NAS 103, and other computing systems via one or more networks. Communication interface 760 may be configured to communicate with a storage system, such as storage system 105.

Processing system 750 comprises microprocessor and other circuitry that retrieves and executes operating software from storage system 745. Storage system 745 may include volatile and nonvolatile, removable, and non-removable media implemented in any method or technology for storage of information, such as computer readable instructions, data structures, program modules, or other data. Storage system 745 may be implemented as a single storage device but may also be implemented across multiple storage devices or sub-systems. Storage system 745 may comprise additional elements, such as a controller to read operating software from the storage systems. Examples of storage media include random access memory, read only memory, magnetic disks, optical disks, and flash memory, as well as any combination or variation thereof, or any other type of storage media. In some implementations, the storage media may be a non-transitory storage media. In some instances, at least a portion of the storage media may be transitory. In no examples would storage media of storage system 745, or any other computerreadable storage medium herein, be considered a transitory form of signal transmission (often referred to as "signals per se"), such as a propagating electrical or electromagnetic signal or carrier wave.

Processing system 750 is typically mounted on a circuit board that may also hold the storage system. The operating software of storage system 745 comprises computer programs, firmware, or some other form of machine-readable program instructions. The operating software of storage system 745 comprises acceleration layer 730 and producer/consumer 731. If producer/consumer 731 is a producer, then acceleration layer 730 may include an interface similar to producer NAS interface 111. If producer/consumer 731 is a consumer, then acceleration layer 730 may include an interface similar to consumer NAS interface 112. The operating software on storage system 745 may further include an operating system, utilities, drivers, network interfaces, applications, or some other type of software. When read and executed by processing system 750 the operating software on storage system 745 directs computing system 700 to perform state collection and master-node failover as described herein. Producer/consumer 731 and acceleration layer 730 may execute natively on processing system 705 or the operating software may include virtualization software, such as a hypervisor, to virtualize computing hardware on which producer/consumer 731 and acceleration layer 730 execute.

In at least one example, producer/consumer 731 is a producer and includes a connector like distributed application connector 123. Producer 731 directs processing system 750 to supply a payload to acceleration layer 730 and receive a unique identifier from acceleration layer 730. In response to receiving the unique identifier, producer 731 directs processing system 750 to provide the unique identifier to a distributed-clustered application. In that example, acceleration layer 730 directs processing system 750 to receive a request from producer 731 to store a payload to a storage repository. In response to the request, acceleration layer 730 directs processing system 750 to provide the unique identifier to the connector component and stores the payload in association with the unique identifier to the storage repository.

In at least one other example, producer/consumer 731 is a consumer and includes a connector like distributed application connector 124. Consumer 731 directs processing system 750 to retrieve a unique identifier associated with the payload from the distributed-clustered application and provide the unique identifier to the acceleration layer 730. Consumer 731 directs processing system 750 to receive the payload from acceleration layer 730. In that example, acceleration layer 730 directs processing system 750 to retrieve the payload from a storage repository using the unique identifier to identify the payload in the storage repository. Acceleration layer 730 further directs processing system 750 to receive a second request from consumer 731 to retrieve the payload and, in response to the second request, supply the payload to consumer 731.

The included descriptions and figures depict specific implementations to teach those skilled in the art how to make and use the best mode. For teaching inventive principles, some conventional aspects have been simplified or omitted. Those skilled in the art will appreciate variations from these implementations that fall within the scope of the invention. Those skilled in the art will also appreciate that the features described above can be combined in various ways to form multiple implementations. As a result, the invention is not limited to the specific implementations described above, but only by the claims and their equivalents.

**The following is a list of further preferred embodiments of the invention:**
Embodiment 1: A method of transmitting data from a producer component to a consumer component using a distributed-clustered application, the method comprising:
   receiving a request from the producer component to provide a payload to the distributed-clustered application;
   in response to the request, supplying the payload to an acceleration layer;
   receiving a unique identifier from the acceleration layer, wherein the acceleration layer stores the payload to a storage repository in association with the unique identifier; and
   in response to receiving the unique identifier, providing the unique identifier to the distributed-clustered application, wherein the consumer component pulls the unique identifier from the distributed-clustered application and uses the unique identifier to receive the payload from the storage repository via the acceleration layer.
Embodiment 2: The method of embodiment 1, wherein supplying the payload to the acceleration layer comprises:
   storing the payload to a location in host memory shared with the acceleration layer, wherein the acceleration layer retrieves the payload from the location.
Embodiment 3: The method of embodiment 2, wherein receiving the unique identifier comprises:
   retrieving the unique identifier from the host memory shared with the acceleration layer.
Embodiment 4: The method of embodiment 1, wherein supplying the payload to the acceleration layer comprises:
   adding the payload to a ring buffer of payloads, wherein the acceleration layer stores the payloads to the storage repository in an order in which the payloads were added to the ring buffer.
Embodiment 5: The method of embodiment 1, wherein the storage repository comprises a file-based storage system and wherein the acceleration layer stores the payload to a location in a first file in the file-based storage system and stores the unique identifier in a second file with an offset to the location in the first file.
Embodiment 6: The method of embodiment 1, wherein the storage repository comprises network attached storage (NAS).
Embodiment 7: The method of embodiment 6, wherein the acceleration layer includes one or more user-space networking stacks to access the NAS.
Embodiment 8: The method of embodiment 1, wherein the storage repository is accessed using Network File System (NFS), Common Internet File System (CIFS), or Internet Small Computer Systems Interface (iSCSI).
Embodiment 9: A method of transmitting data from a producer component to a consumer component using a distributed-clustered application, the method comprising:
   receiving a request from the consumer component to retrieve a payload from the distributed-clustered application;
   in response to the request, retrieving a unique identifier associated with the payload from the distributed-clustered application;
   providing the unique identifier to an acceleration layer;
   receiving the payload from the acceleration layer, wherein the acceleration layer retrieves the payload from a storage repository using the unique identifier, and wherein the acceleration layer stored the payload from the producer component to the storage repository in association with the unique identifier; and
   in response to receiving the payload, supplying the payload to the consumer component.
Embodiment 10: The method of embodiment 9, wherein receiving the payload from the acceleration layer comprises:
   retrieving the payload from a location in host memory shared with the acceleration layer, wherein the acceleration layer stored the payload in the location.
Embodiment 11: A method of transmitting data from a producer component to a consumer component using a distributed-clustered application, the method comprising:
   receiving a first request from a producer-connector component of the producer component to store a payload to a storage repository;
   in response to the first request:
      providing a unique identifier to the connector component, wherein the connector component provides the unique identifier to the distributed-clustered application; and
      storing the payload in association with the unique identifier to the storage repository;
      retrieving the payload from the storage repository using the unique identifier to identify the payload in the storage repository;
      receiving a second request from a consumer-connector component of the consumer component to retrieve the payload; and
      in response to the second request, supplying the payload to the consumer component.
Embodiment 12: The method of embodiment 11, comprising:
   retrieving the payload from a location in host memory shared with the producer-connector component, wherein the producer-connector component added the payload to the location.
Embodiment 13: The method of embodiment 12, wherein the location is part of a ring buffer of payloads and wherein the payload is retrieved from the ring buffer in an order in which it was added to the ring buffer by the producer-connector component.
Embodiment 14: The method of embodiment 11, wherein supplying the payload comprises:
   storing the payload in memory shared with the consumer-connector component, wherein the producer-connector component retrieves the payload from the memory.
Embodiment 15: The method of embodiment 11, comprising:
   storing, in a payload cache, the payload in association with the unique identifier; and
   in response to the second request, identifying the payload associated with the unique identifier in the payload cache.
Embodiment 16: The method of embodiment 15, wherein the payload cache comprises a key-value store and wherein the unique identifier is a key in the key-value store and the payload is a value in the key-value store corresponding to the key.
Embodiment 17: The method of embodiment 11, comprising:
   predicting the unique identifier will be received in the second request prior to receiving the second request, wherein the payload is retrieved prior to receiving the second request.
Embodiment 18: The method of embodiment 11, wherein the storage repository comprises a file-based storage system and wherein storing the payload in association with the unique identifier to the storage repository comprises:
   storing the payload to a location in a first file in the file-based storage system and stores the unique identifier in a second file with an offset to the location in the first file.
Embodiment 19: The method of embodiment 18, wherein retrieving the payload from the storage repository comprises:
   retrieving the offset from the second file using the unique identifier; and
   retrieving the payload at the offset from the first file.
Embodiment 20: The method of embodiment 11, wherein the storage repository comprises network attached storage (NAS) and the NAS is accessed using one or more user-space networking stacks.

## Claims

1. A method of transmitting data from a producer component to a consumer component using a distributed-clustered application, the method comprising:
receiving a request from the producer component to provide a payload to the distributed-clustered application;
in response to the request, supplying the payload to an acceleration layer;
receiving a unique identifier from the acceleration layer, wherein the acceleration layer stores the payload to a storage repository in association with the unique identifier; and
in response to receiving the unique identifier, providing the unique identifier to the distributed-clustered application, wherein the consumer component pulls the unique identifier from the distributed-clustered application and uses the unique identifier to receive the payload from the storage repository via the acceleration layer.

2. The method of claim 1, wherein supplying the payload to the acceleration layer comprises:
storing the payload to a location in host memory shared with the acceleration layer, wherein the acceleration layer retrieves the payload from the location.

3. The method of claim 2, wherein receiving the unique identifier comprises:
retrieving the unique identifier from the host memory shared with the acceleration layer.

4. The method of claim 1 or 3, wherein supplying the payload to the acceleration layer comprises:
adding the payload to a ring buffer of payloads, wherein the acceleration layer stores the payloads to the storage repository in an order in which the payloads were added to the ring buffer.

5. The method of one of claims 1 to 4, wherein the storage repository comprises a file-based storage system and wherein the acceleration layer stores the payload to a location in a first file in the file-based storage system and stores the unique identifier in a second file with an offset to the location in the first file.

6. The method of one of claims 1 to 5, wherein the storage repository comprises network attached storage (NAS), and/or
wherein the acceleration layer includes one or more user-space networking stacks to access the NAS.

7. The method of one of claims 1 to 6, wherein the storage repository is accessed using Network File System (NFS), Common Internet File System (CIFS), or Internet Small Computer Systems Interface (iSCSI).

8. A method of transmitting data from a producer component to a consumer component using a distributed-clustered application, the method comprising:
receiving a request from the consumer component to retrieve a payload from the distributed-clustered application;
in response to the request, retrieving a unique identifier associated with the payload from the distributed-clustered application;
providing the unique identifier to an acceleration layer;
receiving the payload from the acceleration layer, wherein the acceleration layer retrieves the payload from a storage repository using the unique identifier, and wherein the acceleration layer stored the payload from the producer component to the storage repository in association with the unique identifier; and
in response to receiving the payload, supplying the payload to the consumer component.

9. The method of claim 8, wherein receiving the payload from the acceleration layer comprises:
retrieving the payload from a location in host memory shared with the acceleration layer, wherein the acceleration layer stored the payload in the location.

10. A method of transmitting data from a producer component to a consumer component using a distributed-clustered application, the method comprising:
receiving a first request from a producer-connector component of the producer component to store a payload to a storage repository;
in response to the first request:
providing a unique identifier to the connector component, wherein the connector component provides the unique identifier to the distributed-clustered application; and
storing the payload in association with the unique identifier to the storage repository;
retrieving the payload from the storage repository using the unique identifier to identify the payload in the storage repository;
receiving a second request from a consumer-connector component of the consumer component to retrieve the payload; and
in response to the second request, supplying the payload to the consumer component.

11. The method of claim 10, comprising:
retrieving the payload from a location in host memory shared with the producer-connector component, wherein the producer-connector component added the payload to the location; and/or
wherein the location is part of a ring buffer of payloads and wherein the payload is retrieved from the ring buffer in an order in which it was added to the ring buffer by the producer-connector component.

12. The method of claim 10 or 11, wherein supplying the payload comprises:
storing the payload in memory shared with the consumer-connector component, wherein the producer-connector component retrieves the payload from the memory.

13. The method of claim 11 or 12, comprising:
storing, in a payload cache, the payload in association with the unique identifier; and
in response to the second request, identifying the payload associated with the unique identifier in the payload cache, and/or
wherein the payload cache comprises a key-value store and wherein the unique identifier is a key in the key-value store and the payload is a value in the key-value store corresponding to the key.

14. The method of claim 10 to 13, comprising:
predicting the unique identifier will be received in the second request prior to receiving the second request, wherein the payload is retrieved prior to receiving the second request; or
wherein the storage repository comprises a file-based storage system and wherein storing the payload in association with the unique identifier to the storage repository comprises:
storing the payload to a location in a first file in the file-based storage system and stores the unique identifier in a second file with an offset to the location in the first file; and/or
wherein retrieving the payload from the storage repository comprises:
retrieving the offset from the second file using the unique identifier; and
retrieving the payload at the offset from the first file.

15. The method of claims 10 to 14, wherein the storage repository comprises network attached storage (NAS) and the NAS is accessed using one or more user-space networking stacks.
